# EUROPEAN PATENT SPECIFICATION

(11) **EP 4 147 616 B1**
(45) Date of publication and mention of the grant of the patent: **30.04.2025**
(21) Application number: 21196564.5
(22) Date of filing: 14.09.2021
(51) Int. Cl.: A47J 36/32, A47J 43/07

(54) **CONTROL UNIT AND METHOD FOR PERFORMING TOOL DETECTION AND/OR CONTROL**
STEUEREINHEIT UND VERFAHREN ZUR DURCHFÜHRUNG EINER WERKZEUGDETEKTION UND/ODER -STEUERUNG
UNITÉ DE COMMANDE ET PROCÉDÉ POUR EFFECTUER UNE DÉTECTION ET/OU UNE COMMANDE D'OUTIL

(43) Date of publication of application: 15.03.2023
(73) Proprietor: BSH Hausgeräte GmbH, 81739 München (DE)
(72) Inventor: Blatnik, Gregor, 2381 Podgorje (SI); Brinovsek, Luka, 2259 Ivanjkovci (SI); Pacnik, Roman, 2383 Smartno pri Slovenj Gradcu (SI)

(56) References cited:
- DE-A1- 102019 211 293
- GB-A- 2 550 630

## Description

The present document relates to a kitchen appliance. In particular, the present document relates to managing the use of one or more tools within a kitchen appliance.

A kitchen appliance may be used with various different tools for performing different processing of a food item which is placed within the receptacle, in particular within the bowl, of the appliance. Example tools are a knife, a shredder, a dough hook, etc. Operation of the appliance may be adapted depending on the tool which is attached to the appliance.

The kitchen appliance may be configured to automatically guide a user through a cooking process using recipe data stored on the kitchen appliance. During the guided cooking process, the user may be requested via a user interface of the kitchen appliance to place a particular tool within the receptacle of the appliance. The tool may then be operated automatically in dependence of the recipe data.

The user may forget to place a tool within the receptacle, or the user may place the wrong tool within the receptacle. This typically impacts the quality of the food item which is prepared within the kitchen appliance.

GB 2 550 630 A describes a kitchen appliance for processing food. DE 10 2019 211 293 A1 describes a household appliance with an automatic motor control

The present document addresses the technical problem of performing tool detection and/or of controlling a tool in an efficient and reliable manner. The technical problem is solved by each of the independent claims. Preferred examples are described in the dependent claims.

According to an aspect, a control unit for an appliance, in particular for a kitchen and/or cooking appliance, is described. The appliance comprises a receptacle, in particular a bowl, for taking up content, in particular a food item. Furthermore, the appliance comprises a temperature modification unit, in particular a heating unit and/or a cooling unit, for modifying the temperature of (in particular for heating up and/or for cooling down) the content within the receptacle. The temperature modification unit may be configured to provide thermal energy to and/or to withdraw thermal energy from the receptacle and/or the content within the receptacle at an (energy) transfer point. The transfer point may be located at the bottom of the receptacle.

The appliance is configured to operate a tool to process the content within the receptacle. The appliance typically comprises a motor configured to drive the tool which is attached to the motor. Example tools are a knife, a shredder, a hook, a foaming tool, etc. The motor may be integrated within a base unit of the appliance, wherein the base unit may be configured to be placed on a worktop of a kitchen. The receptacle may be positioned on top of the base unit.

The appliance may be configured such that the tool which is attached to and/or driven by the motor is selectable in an interchangeable manner from a set of K different tools, with K ≥ 2 (typically K≥ 5 or K≥ 10). By way of example, a user may be enabled to position (sequentially) K different tools onto a coupling of the appliance. The coupling may be located within the receptacle. The coupling may be coupled to the motor, and the motor may be configured to drive a tool via the coupling.

Furthermore, the appliance comprises a temperature sensor (e.g., an Infrared (IR) based sensor and/or a resistance-based sensor) configured to provide measurement data regarding the temperature of the content. The temperature of the content may be sensed at a measurement point, wherein the location of the measurement point may differ from the location of the transfer point. In particular, the measurement point may be located at a higher level than the transfer point (e.g., at a side wall of the receptacle), e.g., at a height of 2cm or more, or 5cm or more above the transfer point.

The control unit is configured to determine, based on measurement data provided by the temperature sensor, a temperature signal which is indicative of the temperature of the content within the receptacle as a function of time, during operation of the temperature modification unit for modifying (in particular for increasing or for decreasing) the temperature of the content within the receptacle. In other words, during a heat-up or cool-down process performed by the temperature modification unit, a temperature signal may be determined, which indicates the temporal evolution of the temperature of the content (at the measurement point of the temperature sensor). In yet other words, it may be determined how the temperature of the content increases and/or decreases during operation of the temperature modification unit (and possibly during operation of the tool).

Furthermore, the control unit is configured to determine tool information regarding the tool and/or regarding operation of the tool, based on the temperature signal. In other words, the temporal evolution of the temperature of the content during a heat-up or cool-down process may be analyzed to determine tool information. The tool information may be indicative of whether or not the tool is operated. Alternatively, or in addition, the tool information may be indicative of the rotation speed of the tool. Alternatively, or in addition, the tool information may be indicative of the type of the tool out of a pre-determined set of K different types of tools, with K>1.

Hence, a control unit is described, which makes use of temperature measurement data regarding the temperature of the content of the appliance, in order to determine tool information regarding the tool that is being used within the appliance. This allows tool information to be determined in a reliable, precise and efficient manner.

According to the invention, the control unit is configured to monitor and/or to control operation of the tool based on the determined tool information. By way of example, the tool information may indicate the actual rotation speed of the tool. This information may be used to control the motor for driving the tool, e.g., in order to regulate the rotation speed of the tool to a target rotation speed. Alternatively, or in addition, the tool information may indicate the type of the tool, which is being operated within the receptacle. The motor for driving the tool may be operated in dependence of the indicated type of the tool, thereby increase the safety and/or the reliability of the appliance.

The control unit may be configured to operate the appliance in dependence of the tool information. By way of example, the appliance may be configured to provide a guided cooking function via a user interface of the appliance. The control unit may be configured to determine recipe data regarding a recipe to be cooked using the appliance. The recipe data may indicate a particular type of tool to be used. The control unit may be configured to instruct the user of the appliance to place the indicated type of tool within the receptacle. Furthermore, the control unit may be configured to operate the tool (subject to a user input by the user via the user interface). In addition, the control unit may be configured to determine tool information regarding the tool (as outlined in the present document). The tool information may be used to verify whether or not the correct type of tool has been placed into the receptacle. If it is determined that the incorrect type of tool or no tool has been placed into the receptacle, an error message may be output via the user interface of the appliance. As a result of this, the reliability of the appliance may be improved (in particular, with regards to a guided cooking function).

The control unit may be configured to determine whether or not the temperature signal comprises one or more localized temperature spikes (in particular, a (periodic) sequence of localized temperature spikes). The one or more localized temperature spikes, in particular the sequence of localized temperature spikes, may be determined in a reliable manner using a pattern recognition algorithm and/or using a frequency analysis of the temperature signal. The temperature signal may show a smooth overall increase or decrease in temperature, wherein the temperature may increase or decrease according to an average temperature gradient. This smooth increase or decrease may be overlayed with relative short temperature spikes (within which the temperature increases and/or decreases in an abrupt manner). The duration and/or the height of a temperature spike may be dependent on the rotation speed of the tool. Typically, the duration of a temperature spike and/or the height of a temperature spike decreases with increasing rotation speed (and vice versa).

The control unit may be configured to determine the rotation speed of the tool (based on motor information regarding the motor of the appliance). Furthermore, the control unit may be configured to search for one or more localized temperature spikes in dependence of the rotation speed of the tool (indicated within the motor information). In particular, the control unit may be configured to look for one or more localized temperature spikes, which are consistent with the determined rotation speed of the tool (in particular, consistent with regards to the duration, the height and/or the period of the localized temperature spikes). As a result of this, one or more localized temperature spikes may be determined in a particularly reliable manner.

The control unit may be configured to determine the tool information based on the presence or the absence of one or more localized temperature spikes. In particular, it may be determined as tool information that the tool is being operated, if it is determined that the temperature signal comprises one or more localized temperature spikes. On the other hand, it may be determined as tool information that the tool is not being operated, if it is determined that the temperature signal does not comprise one or more localized temperature spikes.

The control unit may be configured to determine a period (i.e., a time duration) between two successive temperature spikes within the temperature signal. The tool information, in particular the rotation speed and/or the type of the tool, may then be determined in a particularly precise manner based on the determined period between two successive temperature spikes within the temperature signal.

The control unit may be configured to determine the temperature gradient of the temperature signal. In particular, the average temperature gradient of the smoothly increasing or decreasing portion of the temperature signal (without the one or more temperature spikes) may be determined. The tool information, in particular, the rotation speed of the tool and/or the type of the tool, may be determined in a particularly precise manner based on the temperature gradient.

The control unit may be configured to perform a frequency analysis of the temperature signal to determine a spectrum of the temperature signal. For this purpose, a Fourier Transform may be used. The tool information, in particular, the rotation speed of the tool and/or the type of the tool, may be determined in a particularly precise manner based on the spectrum of the temperature signal.

The control unit may be configured to compare the temperature signal with a reference temperature signal. In particular, the control unit may be configured to compare the temperature signal with a set of K different reference temperature signals for the corresponding set of K different types of tools. The one or more reference temperature signals may have been determined beforehand. Alternatively, or in addition, the one or more reference temperature signals may have been stored on a storage unit of the appliance.

The one or more reference temperature signals may be dependent on power information regarding the power with which the temperature modification unit is being operated. Alternatively, or in addition, the one or more reference temperature signals may be dependent on motor information regarding the operation (in particular, the rotation speed) of the motor for driving the tool. Alternatively, or in addition, the one or more reference temperature signals may be dependent on content information regarding the content (in particular, the weight and/or of the type of the content) within the receptacle.

Hence, the control unit may be configured to determine the power information, the motor information and/or the content information. Furthermore, the control unit may be configured to determine, in particular to select, the one or more reference temperature signals (in particular, the set of K different reference temperature signals), in dependence of the power information, the motor information and/or the content information.

The tool information, in particular, the rotation speed of the tool and/or the type of the tool, may be determined in a particularly precise manner based on the comparison, in particular, based on the comparison of the temperature signal with the set of K different reference temperature signals.

Hence, the control unit may be configured to determine power information regarding the power with which the temperature modification unit is being operated, in particular to heat-up or to cool-down the content within the receptacle. The power of the temperature modification unit typically has an impact on the temperature gradient of the temperature signal and/or on the height of the temperature spikes. The tool information, in particular, the rotation speed of the tool and/or the type of the tool, may be determined in a particularly precise manner based on the power information.

The control unit may be configured to determine motor information regarding the operation of the motor for driving the tool. The motor information may be indicative of the rotation speed of the motor. As indicated above, the motor information may be used for identifying the one or more temperature spikes and/or for selecting an appropriate reference temperature signal. Hence, the tool information, in particular, the rotation speed of the tool and/or the type of the tool, may be determined in a particularly precise manner based on the motor information.

The control unit may be configured to determine content information regarding the content within the receptacle. The content information may be indicative of the weight and/or of the type of the content. The content information may be determined using a weight sensor of the appliance and/or using recipe data for a guided cooking process and/or using user input provided by a user of the appliance via the user interface of the appliance. The content information typically has an impact on the temperature gradient of the temperature signal and/or on the shape of the temperature spikes. The tool information, in particular, the rotation speed of the tool and/or the type of the tool, may be determined in a particularly precise manner based on the content information.

According to a further aspect, an appliance, in particular a kitchen and/or cooking appliance, is described. The appliance comprises a receptacle for taking up content (in particular a food item). Furthermore, the appliance comprises a temperature modification unit, in particular a heating unit and/or a cooling unit, for modifying the temperature of the content within the receptacle. The temperature modification unit may be configured to modify the temperature of the content at a transfer point (for transferring thermal energy).

The appliance further comprises a tool for processing the content within the receptacle. The tool may be operated using a motor of the appliance. In addition, the appliance comprises a temperature sensor configured to provide measurement data regarding the temperature of the content. The measurement data may be sensed at a measurement point. The locations of the transfer point and of the measurement point may differ from one another.

Furthermore, the appliance comprises a control unit (in particular as described in the present document). The control unit may be configured to determine tool information regarding the tool and/or regarding operation of the tool, based on the measurement data of the temperature sensor, in particular based on the temporal evolution of the measured temperature of the content of the receptacle during a heat-up and/or cool-down process.

According to another aspect, a method for determining tool information regarding a tool and/or regarding operation of a tool of an appliance, in particular of a kitchen appliance, is described. The method comprises determining, based on measurement data provided by a temperature sensor of the appliance, a temperature signal indicative of the temperature of the content within the receptacle of the appliance as a function of time, during operation of the temperature modification unit of the appliance for modifying, in particular for increasing or for decreasing, the temperature of the content within the receptacle. The method further comprises determining tool information regarding the tool and/or regarding operation of the tool, based on the temperature signal. The tool information may be used to monitor and/or to control operation of the tool.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present document may be used stand-alone or in combination with the other methods and systems disclosed in this document. In addition, the features outlined in the context of a system are also applicable to a corresponding method.

The invention is explained below in an exemplary manner with reference to the accompanying drawings, wherein
- Figure 1a: shows a block diagram of a kitchen appliance, in particular of a cooking processor;
- Figure 1b: shows a perspective view of a kitchen appliance;
- Figure 2: illustrates the impact of tool operation on the measurement of the temperature of the content of the receptacle of a kitchen appliance;
- Figure 3: shows different temperature signals; and
- Figure 4: shows a flow chart of a method for performing tool detection and/or for operating a tool of an appliance.

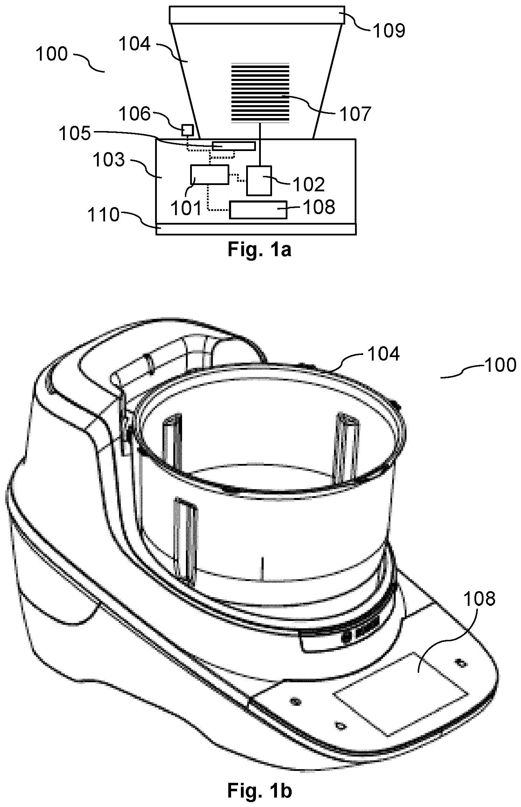

As outlined above, the present document is directed at performing tool detection and/or at operating a tool of an appliance in an efficient and reliable manner. In this context, Fig. 1a shows a block diagram of an example appliance 100 which comprises a base unit 103 on which a receptacle 104, in particular a bowl, is placed. The receptacle 104 may be configured to be covered by a lid 109. The base unit 103 comprises a motor 102 which is configured to drive a tool 107 which is located within the receptable 104. The tool 107 may be detachable and/or exchangeable. In particular, the appliance 100 may be configured to be used with an arbitrary tool 107 out of a pre-determined set of K different tools 107.

The appliance 100 may comprise a heating unit 105 (which may alternatively, or in addition, be integrated into the receptacle 104) for heating the receptacle 104, e.g., for allowing a food item to be cooked within the receptacle 104. The heating unit 105 is an example for a temperature modification unit 105 which is configured to modify the temperature of the content within the receptacle 104.

Furthermore, the appliance 100 may comprise a temperature sensor 106 which is configured to provide sensor data regarding the temperature of the food item within the receptacle 104. In addition, the appliance 100 may comprise a user interface 108 which allows a user to interact with the appliance 100, e.g., for activating or for deactivating the motor 102. In addition, the appliance 100 may be connected to the internet, to another appliance and/or to a (smart) device via a (wireless) communication interface such as WLAN. A control unit 101 of the appliance 100 may be configured to operate the appliance 100, in particular the motor 102 and/or the heating unit 105, in dependence of a user input received via the user interface 108 (of the appliance 100 or of a remote device).

Fig. 1b shows a perspective view of an exemplary appliance 100.

Operation of the appliance 100 may vary depending on the tool 107 which is being used within the receptacle 104. By way of example, the rotation speed, in particular a maximum speed, of the motor 102 may be dependent on the tool 107 which is being used. The control unit 101 may be configured to request the user via the user interface 108 to manually identify the tool 107 that has been placed within the receptacle 104 and/or to manually insert a particular tool 107 into the receptacle 104. Such a manual identification and/or placement process is prone to errors, which may impact the quality of the food item that is being processed within the receptacle 104.

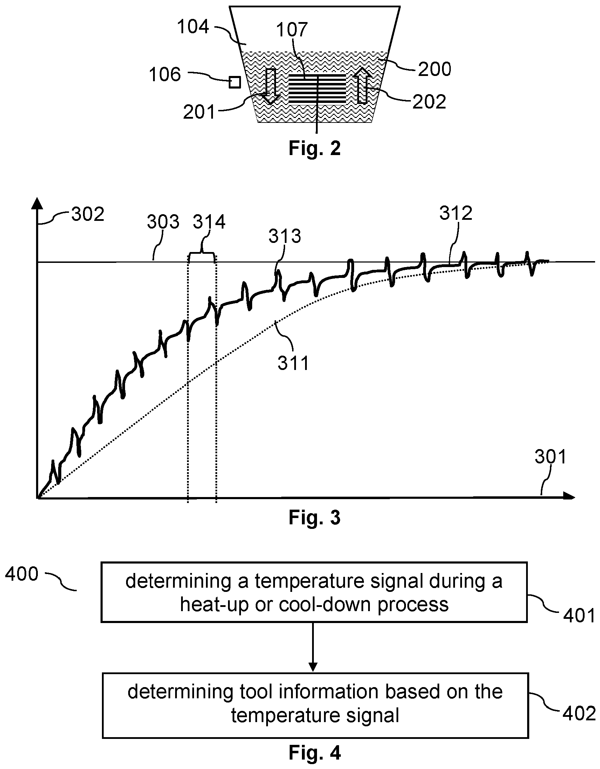

Fig. 2 shows the receptacle 104 of an appliance 100, which contains a food item 200 that is being processed using a tool 107. Operation of the tool 107 causes the food item 200 to be moved around within the receptacle 104. In particular, relatively cold portions of the food item 200 may be moved downwards 201 towards the bottom of the receptacle 104 (where the heating unit 105 may be located). On the other hand, relatively hot portions of the food item 200 may be moved upwards 202 towards the top of the receptacle 104. This movement of different portions of the food item 200, which are at different temperatures, may be used to determine information regarding the tool 107 that is located and/or operated within the receptacle 104. In particular the measurement data of the one or more temperature sensors 106 of the appliance 100 may be used to determine information regarding the tool 107 that is located and/or operated within the receptacle 104. This information is referred to as "tool information" within the present document.

Fig. 3 shows example temperature signals 311, 312 which are indicative of the measured temperature 302 of the food item 200 as a function of time 301. The measured temperature 302 at a particular time instant may be determined based on measurement data provided by the one or more temperature sensors 106 of the appliance 100 at the particular time instant. Example temperature sensors 106 are an Infrared (IR) based temperature sensor and a Resistance Temperature Device (RTD) sensor.

The first temperature signal 311 corresponds to a situation, where the food item 200 is heated up (up to the target temperature 303 which may have been set by the user and/or which may depend on recipe data) without operation of a tool 107 within the receptacle 104. As can be seen, the measured temperature 302 (which is typically measured at a particular measurement point on the receptacle 104) increases smoothly up to the target temperature 303.

Furthermore, Fig. 3 shows a second temperature signal 312 which corresponds to a situation, where the food item 200 is heated up, while a tool 107 is being operated within the receptacle 104. It can be observed that the second temperature signal 312 comprises local temperature spikes 313, which are due to the tool 107 (e.g., the blade of a knife) passing by the measurement point of the one or more temperature sensors 106. The local spikes 313 have a period 314 which is dependent on the rotation speed of the tool 107. By way of example, if the tool 107 is a knife with N blades, then a group of N consecutive spikes 313 may correspond to a full rotation of the tool 107.

Hence, the presence of (possibly periodic) spikes 313 within a temperature signal 312 may be used as an indication that a tool 107 is being operated within the receptacle 104. Furthermore, the period 314 of the spikes 313, i.e., the time duration between two consecutive spikes 313, may be used as an indication of the rotation speed of the tool 107 and/or as an indication of the type of the tool 107. In addition, the shape of the spikes 313 may be analyzed to determine the type of the tool 107 which is being operated within the receptacle 104.

Furthermore, it can be observed that the second temperature signal 312 (with operation of a tool 107) increases faster than the first temperature signal 311 (without operation of a tool 107). In particular, the temperature gradient of the second temperature signal 312 is higher than the temperature gradient of the first temperature signal 311. Hence, the temperature gradient of the temperature signal 311, 312 may be used to determine tool information regarding the tool 107 which is located within the receptacle 104.

Hence, a food preparation and/or cooking machine 100 is described, which is equipped with one or more temperature sensors 106 that measure the temperature 302 of the bowl content 200 (in particular food). A temperature sensor 106 may be located at the bottom of the bowl 104. Alternatively, or in addition, a temperature sensor 106 may be located at the side of the bowl 104. A temperature sensor 106 may be integrated within the bowl 104 or touching the bowl 104. As a temperature sensor 106 a contact-based sensor, such as an RTD sensor, may be used. Alternatively, or in addition, a contactless sensor, such as an IR thermopile or an array sensor or a thermocouple, may be used.

As outlined above, sudden temperature changes 313, e.g., spikes, may be observed within the temperature signal 312 regarding the temperature 302 of the bowl content 200, during tool operation. In particular, relatively fast temperature changes 313 as a consequence of a rotating motorized tool 107 which is processing the bowl content 200 may be observed. This information may be used to check and/or control the tool operation.

In other words, one or more temperature sensors 106 may be used to measure the temperature 302 of the content 200 (in particular, food) within the bowl 104. The content 200 may be processed using heat and a motorized tool 107, like a stirrer or a whisk. If the tool 107 performs a mixing function, then the tool 107 moves the relatively hot content 200 from the bottom side of the bowl 104 into the upward direction 202, and the relatively cold content 200 in the downward direction 201, where the content 200 will be heated up. Overall, the function of mixing-up the content 200 speeds up the heat-up process and ensures a homogeneous temperature 302 of the content 200 within the bowl 104. The mixing effect creates sudden temperature changes 313, in particular spikes, that are visible on the temperature sensor measurement 312. These sudden temperature changes 313 have the same frequency as the tool rotation and/or as the mixing interval.

As can be observed in Fig. 3, without tool steering, the temperature 302 of the content 200 increases relatively slowly and without any sudden changes 313 that occur because of the mixing effect of the tool 107. On the other hand, with tool steering, the temperature 302 of the content 200 increases at an increased speed and the tool generates sudden temperature changes 313 that are visible on the temperature sensor measurement, i.e., on the temperature signal 312.

A temperature gradient and/or frequency of repetition analysis may be performed, in order to detect a rotating tool inside the appliance 100. Furthermore, in particular in case of a known tool 107, tool operation may be measured and/or controlled based on the temperature signal 312.

Fig. 4 shows a flow chart of an example (possibly computer-implemented) method 400 for determining tool information regarding a tool 107 and/or regarding operation of a tool 107 of an appliance 100. The method 400 may be executed by a control unit 101 of the appliance 100.

The appliance 100 comprises a receptacle 104 (also referred to herein as a bowl) for taking up content 200, in particular a food item. Furthermore, the appliance 100 comprises a temperature modification unit 105, in particular a heating unit and/or a cooling unit, for modifying the temperature 302 of the content 200 within the receptacle 104. The temperature medication unit 105 may be configured to provide thermal energy to the content 200 for heating up the content 200. Alternatively, or in addition, the temperature modification unit 105 may be configured to withdraw thermal energy from the content 200 for cooling down the content 200. The energy transfer between the temperature modification unit 105 and the content 200 may occur at a transfer point, wherein the transfer point may be located at the bottom of the receptacle 104.

The appliance 100 is configured to operate a (exchangeable) tool 107 to process the content 200 within the receptacle 104. The tool 107 may be configured to be operated at variable rotation speeds. Furthermore, the appliance 100 may be configured to take up different types of tools 107 (e.g., a knife, a shredder, a dough hook, etc.). The tool 107 may be configured to mix up the content 200 within the receptacle 104.

Furthermore, the appliance 100 comprises one or more temperature sensors 106 configured to provide measurement data regarding the temperature 302 of the content 200. The temperature sensor 106 may be a contact-based or a contactless sensor. Example temperature sensors 106 are an IR-based sensor and/or a resistor-based sensor. A temperature sensor 106 may be configured to sense the measurement data at a measurement point (which may be located at or within the receptacle 104). The locations of the measurement points of the one or more temperature sensor 106 typically differ from the location of the transfer point of the temperature modification unit 105. In particular, the one or more measurement points may be separated from the transfer point by a minimum distance (e.g., 5cm or more, or 10cm or more). In an example, the one or more measurement points are located above the transfer point (e.g., 2cm or more, or 5cm or more above the transfer point). As a result of this, measurement data may be sensed by the one or more temperature sensors 106, which allows the determination of particularly precise and/or reliable tool information.

The method 400 comprises determining 401, based on the measurement data provided by the one or more temperature sensors 106, a temperature signal 311, 312 which is indicative of the temperature 302 of the content 200 within the receptacle 104 as a function of time 301, during operation of the temperature modification unit 105 for modifying (in particular, for increasing or for decreasing) the temperature 302 of the content 200 within the receptacle 104. In other words, a temperature signal 311, 312 may be determined, which indicates how the temperature 302 of the content 200 is increasing or decreasing over time 301, while the temperature modification unit 105 is being operated.

Furthermore, the method 400 comprises determining 402 the tool information regarding the tool 107 and/or regarding the operation of the tool 107, based on the temperature signal 311, 312, in particular based on the temporal evolution of the increase or the decrease of the temperature 302 of the content 200. In particular, it may be determined whether or not the tool 107 is being operated. Alternatively, or in addition, the type of the tool 107 and/or the rotation speed of the tool 107 may be determined.

By making use of the temperature 302 of the content 200 during a heat-up or cool-down process, precise and reliable tool information may be determined in an efficient manner (without the need of additional tool detection means).

It should be noted that the description and drawings merely illustrate the principles of the proposed methods and systems. Those skilled in the art will be able to implement various arrangements that, although not explicitly described or shown herein, and are as well covered by this application as long as the resulting embodiments fall within the scope of the appended claims.

Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof, as long as they fall within the scope of protection which is defined by the appended claims.

## Claims

1. A control unit (101) for an appliance (100); wherein the appliance (100) comprises a receptacle (104) for taking up content (200), in particular a food item; wherein the appliance (100) comprises a temperature modification unit (105), in particular a heating unit and/or a cooling unit, for modifying a temperature (302) of the content (200) within the receptacle (104); wherein the appliance (100) is configured to operate a tool (107) to process the content (200) within the receptacle (104); and wherein the appliance (100) comprises a temperature sensor (106) configured to provide measurement data regarding the temperature (302) of the content (200); wherein the control unit (101) is configured to
- determine, based on measurement data provided by the temperature sensor (106), a temperature signal (311, 312) indicative of the temperature (302) of the content (200) within the receptacle (104) as a function of time (301), during operation of the temperature modification unit (105) for modifying the temperature (302) of the content (200) within the receptacle (104); being **characterised in that** the control unit is further configured to
- determine tool information regarding the tool (107) and/or regarding operation of the tool (107), based on the temperature signal (311, 312); and
- monitor and/or control operation of the tool (107) based on the determined tool information.

2. The control unit (101) of claim 1, wherein the control unit (101) is configured to
- determine whether or not the temperature signal (311, 312) comprises one or more localized temperature spikes (313);
- determine the tool information based on the presence or the absence of one or more localized temperature spikes (313);
- in particular, determine as tool information that the tool (107) is being operated, if it is determined that the temperature signal (311, 312) comprises one or more localized temperature spikes (313); and
- in particular, determine as tool information that the tool (107) is not being operated, if it is determined that the temperature signal (311, 312) does not comprise one or more localized temperature spikes (313).

3. The control unit (101) of claim 2, wherein the control unit (101) is configured to
- determine a period (314) between two successive temperature spikes (313) within the temperature signal (311, 312); and
- determine the tool information, in particular a rotation speed and/or a type of the tool (107), based on the determined period (314) between two successive temperature spikes (313) within the temperature signal (311, 312).

4. The control unit (101) of any of claims 2 to 3, wherein the control unit (101) is configured to detect the one or more localized temperature spikes (313), in particular a sequence of localized temperature spikes (313), using a pattern recognition algorithm and/or using frequency analysis of the temperature signal (311, 312).

5. The control unit (101) of any previous claim, wherein the control unit (101) is configured to
- determine a temperature gradient of the temperature signal (311, 312); and
- determine the tool information based on the temperature gradient.

6. The control unit (101) of any previous claim, wherein the control unit (101) is configured to
- perform a frequency analysis of the temperature signal (311, 312) to determine a spectrum of the temperature signal (311, 312); and
- determine the tool information based on the spectrum of the temperature signal (311, 312).

7. The control unit (101) of any previous claim, wherein the control unit (101) is configured to
- compare the temperature signal (311, 312) with a reference temperature signal; and
- determine the tool information based on the comparison.

8. The control unit (101) of claim 7, wherein the control unit (101) is configured to
- compare the temperature signal (311, 312) with a set of K different reference temperature signals for a corresponding set of K different types of tools (107); and
- determine as tool information the type of the tool (107) out of the set of K different types of tools (107), which is used to process the content (200), based on the comparison of the temperature signal (311, 312) with the set of K different reference temperature signals.

9. The control unit (101) of any previous claim, wherein the control unit (101) is configured to
- determine power information regarding a power with which the temperature modification unit (105) is being operated, in particular to heat-up or to cool-down the content (200) within the receptacle (104); and
- determine the tool information based on the power information.

10. The control unit (101) of any previous claim, wherein the control unit (101) is configured to
- determine motor information regarding operation of a motor (102) for driving the tool (107); wherein in particular the motor information is indicative of a rotation speed of the motor (102); and
- determine the tool information based on the motor information.

11. The control unit (101) of any previous claim, wherein the control unit (101) is configured to
- determine content information regarding the content (200) within the receptacle (104); wherein in particular the content information is indicative of a weight and/or of a type of the content (200); and
- determine the tool information based on the content information.

12. The control unit (101) of any previous claim, wherein
- the tool information is indicative of whether or not the tool (107) is operated; and/or
- the tool information is indicative of a rotation speed of the tool (107); and/or
- the tool information is indicative of a type of the tool (107) out of a pre-determined set of K different types of tools (107), with K>1.

13. An appliance (100), wherein the appliance (100) comprises,
- a receptacle (104) for taking up content (200);
- a temperature modification unit (105), in particular a heating unit and/or a cooling unit, for modifying a temperature (302) of the content (200) within the receptacle (104);
- a tool (107) for processing the content (200) within the receptacle (104);
- a temperature sensor (106) configured to provide measurement data regarding the temperature (302) of the content (200); and
- a control unit (101) according to any one of the previous claims, which is configured to determine tool information regarding the tool (107) and/or regarding operation of the tool (107), based on the measurement data of the temperature sensor (106).

14. A computer-implemented method (400) for determining tool information regarding a tool (107) and/or regarding operation of a tool (107) of an appliance (100); wherein the appliance (100) comprises a receptacle (104) for taking up content (200), in particular a food item; wherein the appliance (100) comprises a temperature modification unit (105), in particular a heating unit and/or a cooling unit, for modifying a temperature (302) of the content (200) within the receptacle (104); wherein the appliance (100) is configured to operate a tool (107) to process the content (200) within the receptacle (104); and wherein the appliance (100) comprises a temperature sensor (106) configured to provide measurement data regarding the temperature (302) of the content (200); wherein the method (400) comprises,
- determining (401), based on measurement data provided by the temperature sensor (106), a temperature signal (311, 312) indicative of the temperature (302) of the content (200) within the receptacle (104) as a function of time (301), during operation of the temperature modification unit (105) for modifying the temperature (302) of the content (200) within the receptacle (104);
- determining (402) tool information regarding the tool (107) and/or regarding operation of the tool (107), based on the temperature signal (311, 312); and
- monitoring and/or controlling operation of the tool (107) based on the determined tool information.

## Patentansprüche

1. Steuereinheit (101) für ein Gerät (100), wobei das Gerät (100) einen Behälter (104) zum Aufnehmen von Inhalt (200), insbesondere eines Lebensmittels, umfasst, wobei das Gerät (100) eine Temperaturänderungseinheit (105), insbesondere eine Heiz- und/oder eine Kühleinheit, zum Ändern einer Temperatur (302) des Inhalts (200) in dem Behälter (104) umfasst, wobei das Gerät (100) so konfiguriert ist, dass es zum Verarbeiten des Inhalts (200) in dem Behälter (104) ein Werkzeug (107) betreibt, und einen Temperatursensor (106) umfasst, der so konfiguriert ist, dass er Messdaten zur Temperatur (302) des Inhalts (200) liefert, wobei die Steuereinheit (101) so konfiguriert ist, dass sie
- auf der Grundlage von von dem Temperatursensor (106) gelieferten Messdaten beim Betrieb der Temperaturänderungseinheit (105) zum Ändern der Temperatur (302) des Inhalts (200) in dem Behälter (104) ein Temperatursignal (311, 312) bestimmt, das die Temperatur (302) des Inhalts (200) in dem Behälter (104) in Abhängigkeit von der Zeit (301) angibt, **dadurch gekennzeichnet, dass** die Steuereinheit ferner so konfiguriert ist, dass sie
- auf der Grundlage des Temperatursignals (311, 312) Werkzeuginformationen zum Werkzeug (107) und/oder zum Betrieb des Werkzeugs (107) bestimmt und
- den Betrieb des Werkzeugs (107) auf der Grundlage der bestimmten Werkzeuginformationen überwacht und/oder steuert.

2. Steuereinheit (101) nach Anspruch 1, wobei die Steuereinheit (101) so konfiguriert ist, dass sie
- bestimmt, ob das Temperatursignal (311, 312) eine oder mehrere lokalisierte Temperaturspitzen (313) umfasst,
- auf der Grundlage des Vorliegens oder Fehlens einer oder mehrerer lokalisierter Temperaturspitzen (313) die Werkzeuginformationen bestimmt,
- insbesondere als Werkzeuginformationen bestimmt, dass sich das Werkzeug (107) in Betrieb befindet, wenn bestimmt wird, dass das Temperatursignal (311, 312) eine oder mehrere lokalisierte Temperaturspitzen (313) umfasst, und
- insbesondere als Werkzeuginformationen bestimmt, dass sich das Werkzeug (107) nicht in Betrieb befindet, wenn bestimmt wird, dass das Temperatursignal (311, 312) keine lokalisierten Temperaturspitzen (313) umfasst.

3. Steuereinheit (101) nach Anspruch 2, wobei die Steuereinheit (101) so konfiguriert ist, dass sie
- eine Periode (314) zwischen zwei aufeinanderfolgenden Temperaturspitzen (313) in dem Temperatursignal (311, 312) bestimmt und
- auf der Grundlage der bestimmten Periode (314) zwischen zwei aufeinanderfolgenden Temperaturspitzen (313) in dem Temperatursignal (311, 312) die Werkzeuginformationen, insbesondere eine Drehzahl und/oder eine Art des Werkzeugs (107), bestimmt.

4. Steuereinheit (101) nach einem der Ansprüche 2 bis 3, wobei die Steuereinheit (101) so konfiguriert ist, dass sie mithilfe eines Mustererkennungsalgorithmus und/oder einer Frequenzanalyse des Temperatursignals (311, 312) die eine oder die mehreren lokalisierten Temperaturspitzen (313), insbesondere eine Abfolge von lokalisierten Temperaturspitzen (313), erkennt.

5. Steuereinheit (101) nach einem der vorhergehenden Ansprüche, wobei die Steuereinheit (101) so konfiguriert ist, dass sie
- einen Temperaturgradienten des Temperatursignals (311, 312) bestimmt und
- auf der Grundlage des Temperaturgradienten die Werkzeuginformationen bestimmt.

6. Steuereinheit (101) nach einem der vorhergehenden Ansprüche, wobei die Steuereinheit (101) so konfiguriert ist, dass sie
- an dem Temperatursignal (311, 312) eine Frequenzanalyse durchführt und so ein Spektrum des Temperatursignals (311, 312) bestimmt und
- auf der Grundlage des Spektrums des Temperatursignals (311, 312) die Werkzeuginformationen bestimmt.

7. Steuereinheit (101) nach einem der vorhergehenden Ansprüche, wobei die Steuereinheit (101) so konfiguriert ist, dass sie
- das Temperatursignal (311, 312) mit einem Referenztemperatursignal vergleicht und
- auf der Grundlage des Vergleichs die Werkzeuginformationen bestimmt.

8. Steuereinheit (101) nach Anspruch 7, wobei die Steuereinheit (101) so konfiguriert ist, dass sie
- das Temperatursignal (311, 312) mit einem Satz von K verschiedenen Referenztemperatursignalen für einen entsprechenden Satz von K verschiedenen Arten von Werkzeugen (107) vergleicht und
- auf der Grundlage des Vergleichs des Temperatursignals (311, 312) mit dem Satz von K verschiedenen Referenztemperatursignalen die Art Werkzeug (107) aus dem Satz von K verschiedenen Arten von Werkzeugen (107) als Werkzeuginformationen bestimmt, die zum Verarbeiten des Inhalts (200) benutzt wird.

9. Steuereinheit (101) nach einem der vorhergehenden Ansprüche, wobei die Steuereinheit (101) so konfiguriert ist, dass sie
- Leistungsinformationen zu einer Leistung bestimmt, mit der die Temperaturänderungseinheit (105) insbesondere zum Erhitzen oder Abkühlen des Inhalts (200) in dem Behälter (104) betrieben wird, und
- auf der Grundlage der Leistungsinformationen die Werkzeuginformationen bestimmt.

10. Steuereinheit (101) nach einem der vorhergehenden Ansprüche, wobei die Steuereinheit (101) so konfiguriert ist, dass sie
- Motorinformationen zum Betrieb eines Motors (102) zum Antreiben des Werkzeugs (107) bestimmt, wobei die Motorinformationen insbesondere eine Drehzahl des Motors (102) angeben, und
- auf der Grundlage der Motorinformationen die Werkzeuginformationen bestimmt.

11. Steuereinheit (101) nach einem der vorhergehenden Ansprüche, wobei die Steuereinheit (101) so konfiguriert ist, dass sie
- Inhaltsinformationen zum Inhalt (200) in dem Behälter (104) bestimmt, wobei die Inhaltsinformationen insbesondere ein Gewicht und/oder eine Art des Inhalts (200) angeben, und
- auf der Grundlage der Inhaltsinformationen die Werkzeuginformationen bestimmt.

12. Steuereinheit (101) nach einem der vorhergehenden Ansprüche, wobei
- die Werkzeuginformationen angeben, ob sich das Werkzeug (107) in Betrieb befindet, und/oder
- die Werkzeuginformationen eine Drehzahl des Werkzeugs (107) angeben und/oder
- die Werkzeuginformationen eine Art des Werkzeugs (107) aus einem vorgegebenen Satz von K verschiedenen Arten von Werkzeugen (107) angeben, wobei K > 1.

13. Gerät (100), wobei das Gerät (100) Folgendes umfasst:
- einen Behälter (104) zum Aufnehmen von Inhalt (200),
- eine Temperaturänderungseinheit (105), insbesondere eine Heiz- und/oder Kühleinheit, zum Ändern einer Temperatur (302) des Inhalts (200) in dem Behälter (104),
- ein Werkzeug (107) zum Verarbeiten des Inhalts (200) in dem Behälter (104),
- einen Temperatursensor (106), der so konfiguriert ist, dass er Messdaten zur Temperatur (302) des Inhalts (200) liefert, und
- eine Steuereinheit (101) nach einem der vorhergehenden Ansprüche, die so konfiguriert ist, dass sie auf der Grundlage der Messdaten des Temperatursensors (106) Werkzeuginformationen zu dem Werkzeug (107) und/oder zum Betrieb des Werkzeugs (107) bestimmt.

14. Computergestütztes Verfahren (400) zum Bestimmen von Werkzeuginformationen zu einem Werkzeug (107) und/oder zum Betrieb eines Werkzeugs (107) eines Geräts (100), wobei das Gerät (100) einen Behälter (104) zum Aufnehmen von Inhalt (200), insbesondere eines Lebensmittels, umfasst, wobei das Gerät (100) eine Temperaturänderungseinheit (105), insbesondere eine Heiz- und/oder eine Kühleinheit, zum Ändern einer Temperatur (302) des Inhalts (200) in dem Behälter (104) umfasst, wobei das Gerät (100) so konfiguriert ist, dass es zum Verarbeiten des Inhalts (200) in dem Behälter (104) ein Werkzeug (107) betreibt, und wobei das Gerät (100) einen Temperatursensor (106) umfasst, der so konfiguriert ist, dass er Messdaten zur Temperatur (302) des Inhalts (200) liefert, wobei das Verfahren (400) Folgendes umfasst:
- Bestimmen (401) eines Temperatursignals (311, 312), das die Temperatur (302) des Inhalts (200) in dem Behälter (104) in Abhängigkeit von der Zeit (301) angibt, auf der Grundlage von von dem Temperatursensor (106) gelieferten Messdaten beim Betrieb der Temperaturänderungseinheit (105) zum Ändern der Temperatur (302) des Inhalts (200) in dem Behälter (104),
- Bestimmen (402) von Werkzeuginformationen zum Werkzeug (107) und/oder zum Betrieb des Werkzeugs (107) auf der Grundlage des Temperatursignals (311, 312) und
- Überwachen und/oder Steuern des Betriebs des Werkzeugs (107) auf der Grundlage der bestimmten Werkzeuginformationen.

## Revendications

1. Unité de commande (101) pour un appareil (100) ; dans laquelle l'appareil (100) comprend un réceptacle (104) destiné à accueillir un contenu (200), en particulier un produit alimentaire ; dans laquelle l'appareil (100) comprend une unité de modification de température (105), en particulier une unité de chauffage et/ou une unité de refroidissement, pour la modification d'une température (302) du contenu (200) au sein du réceptacle (104) ; dans laquelle l'appareil (100) est configuré pour mettre en fonctionnement un outil (107) pour traiter le contenu (200) au sein du réceptacle (104) ; et dans laquelle l'appareil (100) comprend un capteur de température (106) configuré pour fournir des données de mesure concernant la température (302) du contenu (200) ; dans laquelle l'unité de commande (101) est configurée pour
- déterminer, sur la base de données de mesure fournies par le capteur de température (106), un signal de température (311, 312) indicatif de la température (302) du contenu (200) au sein du réceptacle (104) en fonction du temps (301), pendant le fonctionnement de l'unité de modification de température (105) pour la modification de la température (302) du contenu (200) au sein du réceptacle (104) ; qui est **caractérisée en ce que** l'unité de commande est en outre configurée pour
- déterminer des informations d'outil concernant l'outil (107) et/ou concernant le fonctionnement de l'outil (107), sur la base du signal de température (311, 312) ; et
- surveiller et/ou commander le fonctionnement de l'outil (107) sur la base des informations d'outil déterminées.

2. Unité de commande (101) selon la revendication 1, dans laquelle l'unité de commande (101) est configurée pour
- déterminer que le signal de température (311, 312) comprend ou non un ou plusieurs pics de température (313) localisés ;
- déterminer les informations d'outil sur la base de la présence ou de l'absence d'un ou de plusieurs pics de température (313) localisés ;
- en particulier, déterminer, en tant qu'informations d'outil, que l'outil (107) est en fonctionnement, s'il est déterminé que le signal de température (311, 312) comprend un ou plusieurs pics de température (313) localisés ; et
- en particulier, déterminer, en tant qu'informations d'outil, que l'outil (107) n'est pas en fonctionnement, s'il est déterminé que le signal de température (311, 312) ne comprend pas un ou plusieurs pics de température (313) localisés.

3. Unité de commande (101) selon la revendication 2, dans laquelle l'unité de commande (101) est configurée pour
- déterminer une période (314) entre deux pics de température (313) successifs au sein du signal de température (311, 312) ; et
- déterminer les informations d'outil, en particulier une vitesse de rotation et/ou un type de l'outil (107), sur la base de la période (314) déterminée entre deux pics de température (313) successifs au sein du signal de température (311, 312).

4. Unité de commande (101) selon l'une quelconque des revendications 2 à 3, dans laquelle l'unité de commande (101) est configurée pour détecter les un ou plusieurs pics de température (313) localisés, en particulier une séquence de pics de température (313) localisés, à l'aide d'un algorithme de reconnaissance de motif et/ou à l'aide d'une analyse fréquentielle du signal de température (311, 312).

5. Unité de commande (101) selon une quelconque revendication précédente, dans laquelle l'unité de commande (101) est configurée pour
- déterminer un gradient de température du signal de température (311, 312) ; et
- déterminer les informations d'outil sur la base du gradient de température.

6. Unité de commande (101) selon une quelconque revendication précédente, dans laquelle l'unité de commande (101) est configurée pour
- réaliser une analyse fréquentielle du signal de température (311, 312) pour déterminer un spectre du signal de température (311, 312) ; et
- déterminer les informations d'outil sur la base du spectre du signal de température (311, 312).

7. Unité de commande (101) selon une quelconque revendication précédente, dans laquelle l'unité de commande (101) est configurée pour
- comparer le signal de température (311, 312) avec un signal de température de référence ; et
- déterminer les informations d'outil sur la base de la comparaison.

8. Unité de commande (101) selon la revendication 7, dans laquelle l'unité de commande (101) est configurée pour
- comparer le signal de température (311, 312) avec un ensemble de K signaux de température de référence différents pour un ensemble correspondant de K types d'outils (107) différents ; et
- déterminer, en tant qu'informations d'outil, le type de l'outil (107) parmi l'ensemble de K types d'outils (107) différents, qui est utilisé pour traiter le contenu (200), sur la base de la comparaison du signal de température (311, 312) avec l'ensemble de K signaux de température de référence différents.

9. Unité de commande (101) selon une quelconque revendication précédente, dans laquelle l'unité de commande (101) est configurée pour
- déterminer des informations de puissance concernant une puissance avec laquelle l'unité de modification de température (105) est mise en fonctionnement, en particulier pour chauffer ou refroidir le contenu (200) au sein du réceptacle (104) ; et
- déterminer les informations d'outil sur la base des informations de puissance.

10. Unité de commande (101) selon une quelconque revendication précédente, dans laquelle l'unité de commande (101) est configurée pour
- déterminer des informations de moteur concernant le fonctionnement d'un moteur (102) pour l'entraînement de l'outil (107) ; dans laquelle en particulier les informations de moteur sont indicatives d'une vitesse de rotation du moteur (102) ; et
- déterminer les informations d'outil sur la base des informations de moteur.

11. Unité de commande (101) selon une quelconque revendication précédente, dans laquelle l'unité de commande (101) est configurée pour
- déterminer des informations de contenu concernant le contenu (200) au sein du réceptacle (104) ; dans laquelle en particulier les informations de contenu sont indicatives d'un poids et/ou d'un type du contenu (200) ; et
- déterminer les informations d'outil sur la base des informations de contenu.

12. Unité de commande (101) selon une quelconque revendication précédente, dans laquelle
- les informations d'outil sont indicatives du fait que l'outil (107) est en fonctionnement ou non ; et/ou
- les informations d'outil sont indicatives d'une vitesse de rotation de l'outil (107) ; et/ou
- les informations d'outil sont indicatives d'un type de l'outil (107) parmi un ensemble prédéterminé de K types d'outils (107) différents, avec K > 1.

13. Appareil (100), dans lequel l'appareil (100) comprend,
- un réceptacle (104) destiné à accueillir un contenu (200) ;
- une unité de modification de température (105), en particulier une unité de chauffage et/ou une unité de refroidissement, pour la modification d'une température (302) du contenu (200) au sein du réceptacle (104) ;
- un outil (107) pour le traitement du contenu (200) au sein du réceptacle (104) ;
- un capteur de température (106) configuré pour fournir des données de mesure concernant la température (302) du contenu (200) ; et
- une unité de commande (101) selon l'une quelconque des revendications précédentes, qui est configurée pour déterminer des informations d'outil concernant l'outil (107) et/ou concernant le fonctionnement de l'outil (107), sur la base des données de mesure du capteur de température (106).

14. Procédé mis en œuvre par ordinateur (400) pour la détermination d'informations d'outil concernant un outil (107) et/ou concernant le fonctionnement d'un outil (107) d'un appareil (100) ; dans lequel l'appareil (100) comprend un réceptacle (104) destiné à accueillir un contenu (200), en particulier un produit alimentaire ; dans lequel l'appareil (100) comprend une unité de modification de température (105), en particulier une unité de chauffage et/ou une unité de refroidissement, pour la modification d'une température (302) du contenu (200) au sein du réceptacle (104) ; dans lequel l'appareil (100) est configuré pour mettre en fonctionnement un outil (107) pour traiter le contenu (200) au sein du réceptacle (104) ; et dans lequel l'appareil (100) comprend un capteur de température (106) configuré pour fournir des données de mesure concernant la température (302) du contenu (200) ; dans lequel le procédé (400) comprend,
- la détermination (401), sur la base de données de mesure fournies par le capteur de température (106), d'un signal de température (311, 312) indicatif de la température (302) du contenu (200) au sein du réceptacle (104) en fonction du temps (301), pendant le fonctionnement de l'unité de modification de température (105) pour la modification de la température (302) du contenu (200) au sein du réceptacle (104) ;
- la détermination (402) d'informations d'outil concernant l'outil (107) et/ou concernant le fonctionnement de l'outil (107), sur la base du signal de température (311, 312) ; et
- la surveillance et/ou la commande du fonctionnement de l'outil (107) sur la base des informations d'outil déterminées.
